(19) Europäisches Patentamt
European Patent Office
Office européen des brevets

(11) EP 4 733 977 A1

(12) EUROPEAN PATENT APPLICATION
published in accordance with Art. 153(4) EPC

(43) Date of publication:
29.04.2026 Bulletin 2026/18

(21) Application number: 24831409.8

(22) Date of filing: 07.05.2024

(51) International Patent Classification (IPC):
G06F 30/398 (2020.01)   G06F 119/10 (2020.01)

(52) Cooperative Patent Classification (CPC):
G06F 30/398; G06F 2119/10

(86) International application number:
PCT/JP2024/016983

(87) International publication number:
WO 2025/004536 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.06.2023 JP 2023104421

(71) Applicant: Sony Semiconductor Solutions
Corporation
Atsugi-shi, Kanagawa 243-0014 (JP)

(72) Inventor: TAGO, Satoshi
Atsugi-shi, Kanagawa 243-0014 (JP)

(74) Representative: Müller Hoffmann & Partner
Patentanwälte mbB
St.-Martin-Strasse 64
81541 München (DE)

(54) INFORMATION PROCESSING DEVICE, DESIGN METHOD, PROGRAM, AND SEMICONDUCTOR DEVICE

(57) To reduce noise in a semiconductor device including conductor layers. An information processing device includes a processing unit. In the information processing device, the processing unit performs processing of determining a first magnetic moment and a second magnetic moment. Of the first magnetic moment and the second magnetic moment, the first magnetic moment is a magnetic moment in a first magnetic field formed by the first conductor layer. The second magnetic moment is a magnetic moment in a second magnetic field formed by the second conductor layer.

Fig. 3

EP 4 733 977 A1

**Description**

Technical Field

The present technology relates to an information processing device. Specifically, the present technology relates to an information processing device for designing a semiconductor device, a designing method, a program, and a semiconductor device.

Background Art

In recent years, in semiconductor devices, noise due to electromagnetic radiation has increased because of high-density mounting and an increased consumption current, and as such noise reduction is often requested. In response to this request, a circuit has been proposed in which electrode pads are disposed at grid points and at positions shifted from the grid points (see, for example, PTL 1). With this arrangement, the interval between pads is short compared to the case where electrode pads are disposed only at grid points.

Citation List

Patent Literature

PTL 1: JP 2014-82393 A

Summary

Technical Problem

In the above-described known technology, noise reduction is achieved by shortening the interval between pads to reduce the area of the path of a loop current flowing through the electrode pads. However, in the above-described known technology, when the power supply terminals (such as pads) have a multi-pin structure with two or more pins, the area of some loop currents becomes larger than expected in certain situations, and there is a possibility that the noise might not be sufficiently reduced.

In view of the above-described circumstance, an object of the present technology is to reduce noise in a semiconductor device including a conductor layer.

Solution to Problem

To solve the above-described problems, a first aspect of the present technology relates to an information processing device including a processing unit configured to perform processing of determining a first magnetic moment in a first magnetic field formed by a first conductor layer and a second magnetic moment in a second magnetic field formed by a second conductor layer layered on the first conductor layer, a designing method performed by the information processing device, and a program for causing a computer to execute the method. This achieves an effect of enabling the design of a semiconductor device with reduced noise.

In addition, according to the first aspect, the processing unit may include an electromagnetic field analysis section configured to determine a distribution of the first and second magnetic fields from design data of each of the first and second conductor layers, and a magnetic moment acquiring section configured to determine the first and second magnetic moments, based on the distribution of the first and second magnetic fields. This achieves an effect of enabling efficient design.

In addition, according to the first aspect, the processing unit may further include a design change section configured to change the design data. This achieves an effect of enabling the design data to be changed in a manner that noise is reduced.

In addition, according to the first aspect, the processing unit may further include a magnetic field intensity determination section configured to determine whether a difference between a magnetic field intensity of a magnetic field obtained by synthesizing the first and second magnetic fields and a predetermined minimum value is smaller than an acceptable value. This achieves an effect of enabling minimization of noise due to the magnetic field.

In addition, according to the first aspect, the electromagnetic field analysis section may determine a magnetic field distribution of an analysis target in a case where one of the first and second conductor layers that is not the analysis target is shielded. This achieves an effect of enabling derivation of only the magnetic field distribution of the analysis target.

In addition, according to the first aspect, the electromagnetic field analysis section may determine a magnetic field distribution of the analysis target in a case where a predetermined excitation source is connected to a terminal of one of the first and second conductor layers that is not the analysis target. This achieves an effect of enabling the derivation of only the magnetic field distribution of the analysis target.

In addition, according to the first aspect, the magnetic moment acquiring section may further determine a third magnetic moment formed by a third conductor layer layered on the second conductor layer, and a magnetic moment obtained by synthesizing two of the first, second, and third magnetic moments. This achieves an effect of enabling efficient design in a case of three layers.

In addition, according to the first aspect, the processing unit may display each of the first and second magnetic moments on a display section. This achieves an effect of enabling the user to make a design change more easily.

A second aspect of the present technology relates to a semiconductor device including a first conductor layer configured to form a first magnetic field having a first magnetic moment; and a second conductor layer layered on the first conductor layer and configured to form a second magnetic field having a second magnetic moment that cancels out the first magnetic moment and is canceled out by the first magnetic moment. This achieves an effect of enabling a reduction in noise due to the magnetic field.

Brief Description of Drawings

[Fig. 1]

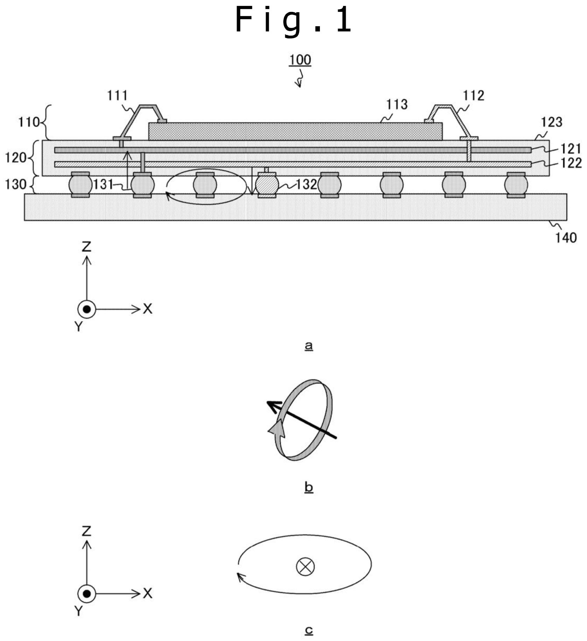

Fig. 1 is a sectional view of a semiconductor device according to a first embodiment of the present technology, and is a diagram illustrating an example of a magnetic moment.
[Fig. 2]

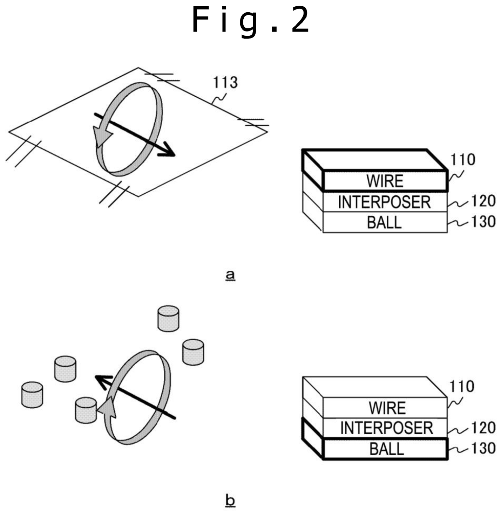

Fig. 2 is a diagram illustrating an example of a magnetic moment according to the first embodiment of the present technology.
[Fig. 3]

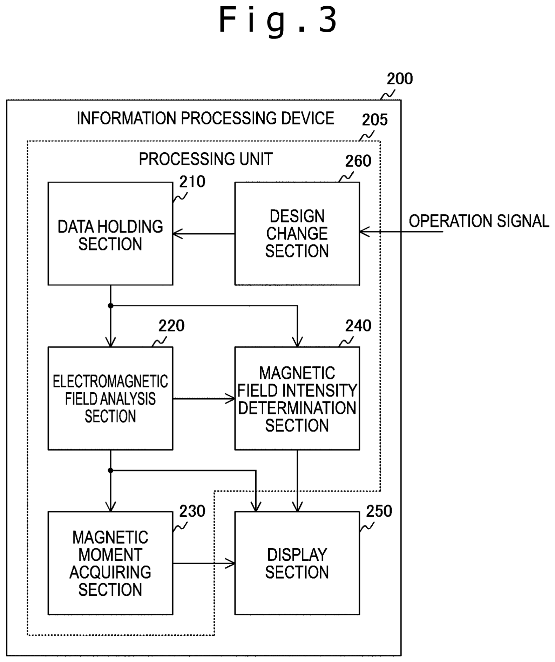

Fig. 3 is a block diagram illustrating an example configuration of an information processing device according to the first embodiment of the present technology.
[Fig. 4]

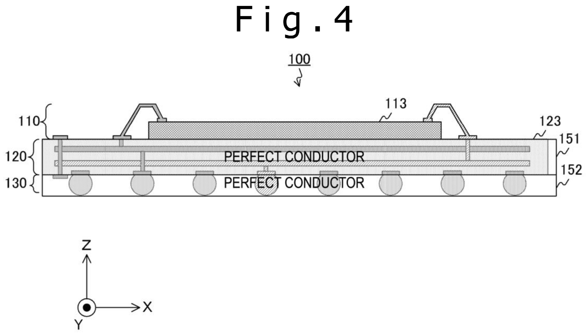

Fig. 4 is a diagram for describing a method of analyzing a magnetic field distribution according to the first embodiment of the present technology.
[Fig. 5]

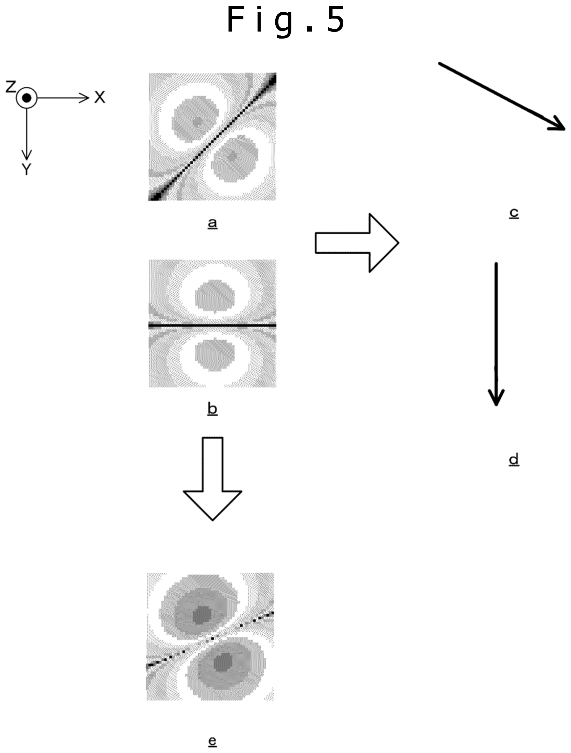

Fig. 5 is a diagram illustrating an example of the magnetic field distribution and magnetic moment before a design change according to the first embodiment of the present technology.
[Fig. 6]

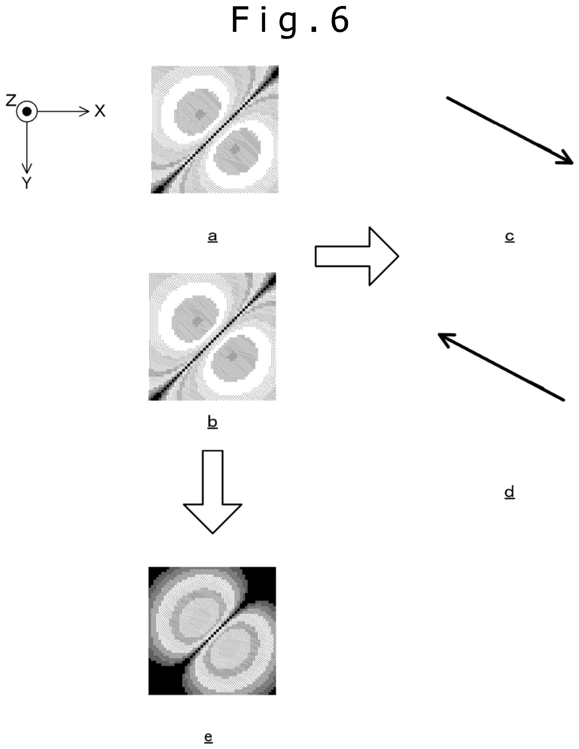

Fig. 6 is a diagram illustrating an example of the magnetic field distribution and magnetic moment after a design change according to the first embodiment of the present technology.
[Fig. 7]

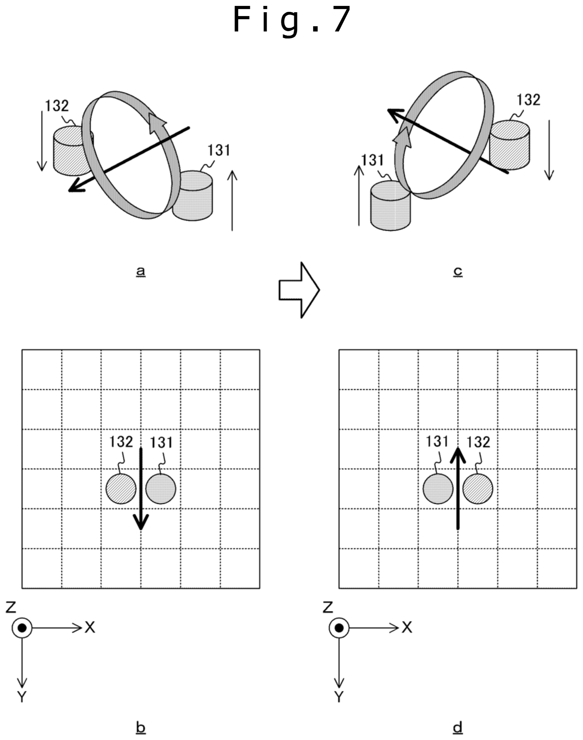

Fig. 7 is a diagram illustrating an example of a ball arrangement and a magnetic moment before and after a design change according to the first embodiment of the present technology.
[Fig. 8]

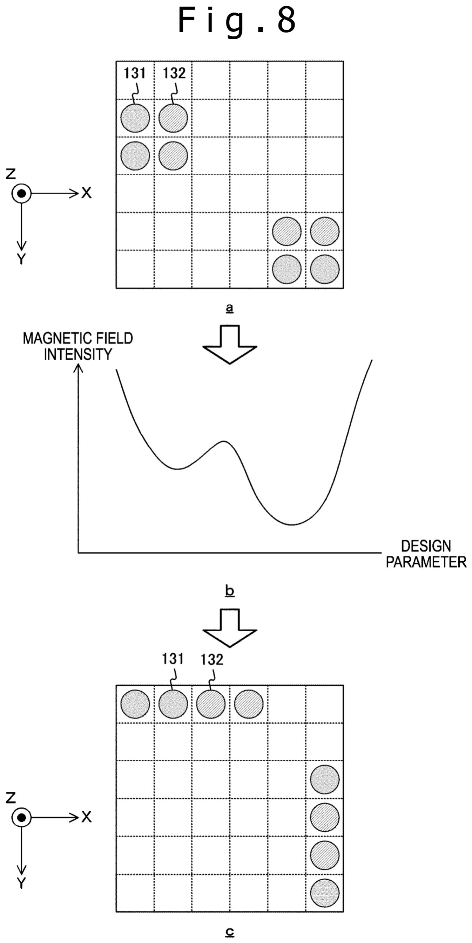

Fig. 8 is a diagram for describing a method of determining a minimum value of the magnetic field intensity according to the first embodiment of the present technology.
[Fig. 9]

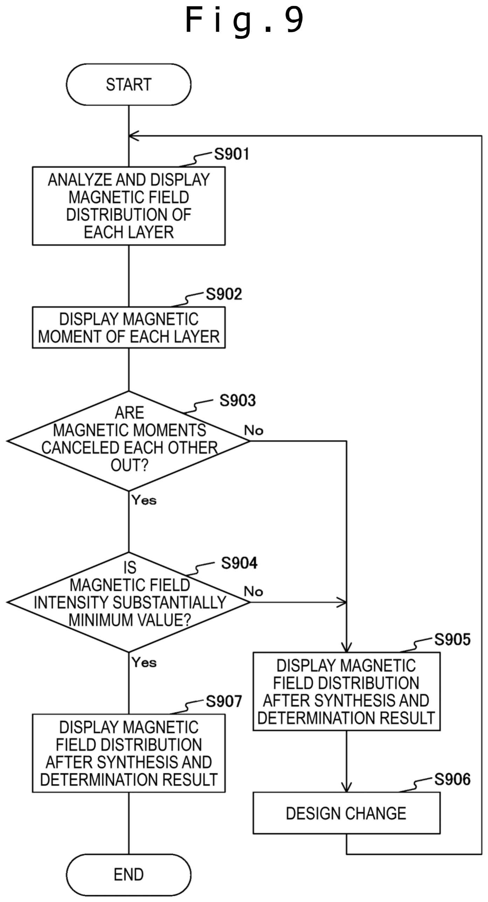

Fig. 9 is a flowchart showing an example of an operation of the information processing device according to the first embodiment of the present technology.
[Fig. 10]

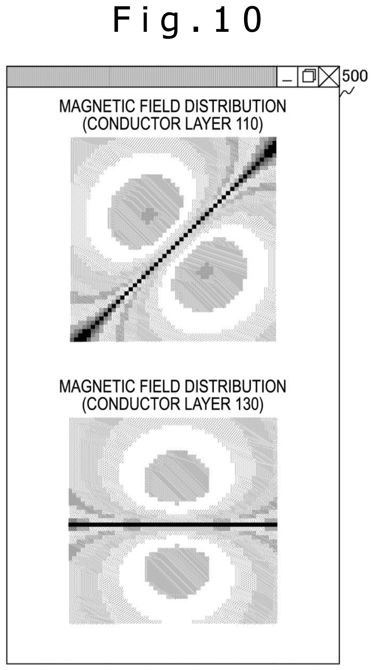

Fig. 10 is an example of a display screen of the magnetic field distribution of each layer according to the first embodiment of the present technology.
[Fig. 11]

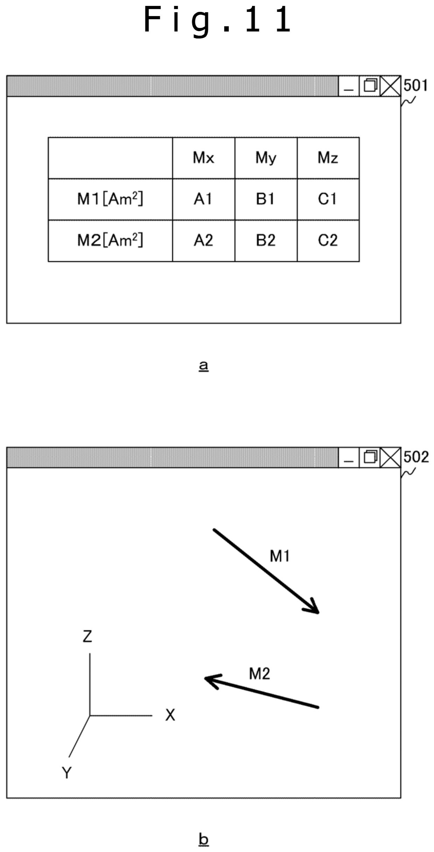

Fig. 11 is an example of a display screen of a magnetic moment according to the first embodiment of the present technology.
[Fig. 12]

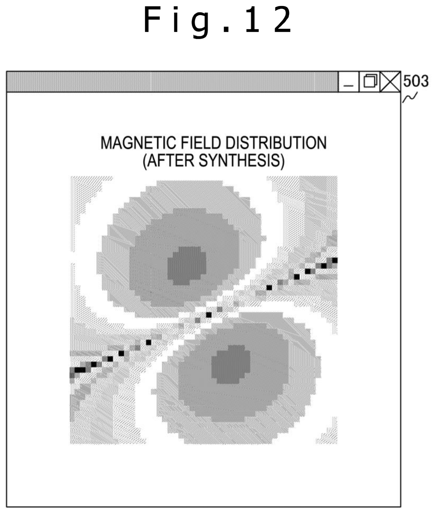

Fig. 12 is an example of a display screen of the magnetic field distribution after synthesis according to the first embodiment of the present technology.
[Fig. 13]

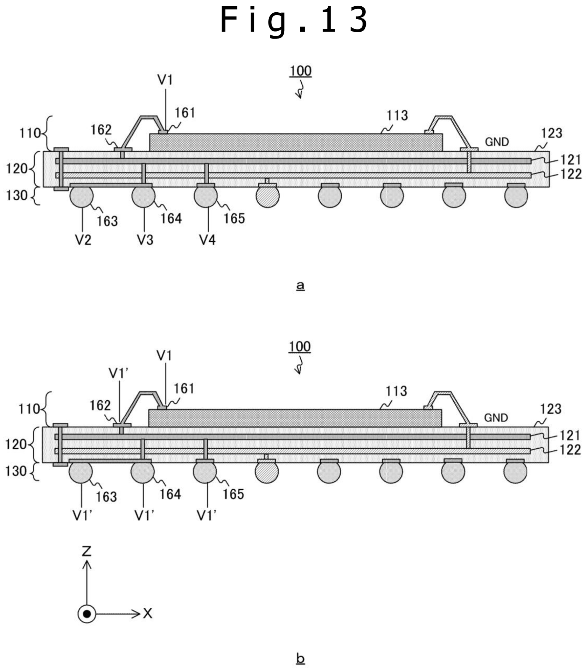

Fig. 13 is a diagram for describing a method of analyzing a magnetic field distribution according to a variation of the first embodiment of the present technology.

[Fig. 14]

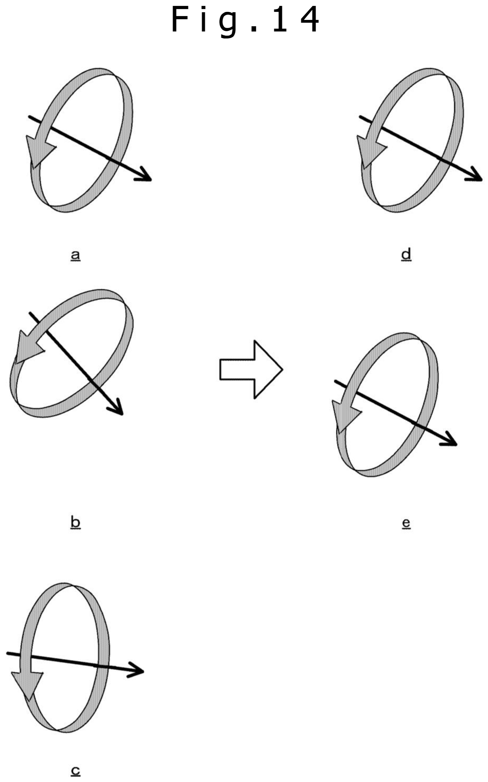

Fig. 14 is a diagram illustrating an example of a magnetic moment before and after synthesis according to a second embodiment of the present technology.

Description of Embodiments

Embodiments for implementing the present technology (hereinafter referred to as embodiments) are described below. Descriptions will be made in the following order.

1. First embodiment (an example in which the magnetic moment of each of two layers is determined)
2. Second embodiment (an example in which the magnetic moment of each of three layers is determined)

1. First Embodiment

Example Configuration of Semiconductor Device

Fig. 1 is a sectional view of a semiconductor device 100 according to the first embodiment of the present technology, and is a diagram illustrating an example of a magnetic moment. Fig. 1a is an example of a sectional view illustrating the semiconductor device 100. Fig. 1b is a perspective view illustrating a magnetic moment and a loop current. Fig. 1c illustrates a magnetic moment and a loop current as viewed from a side surface.

As exemplified in Fig. 1a, the semiconductor device 100 includes a die 113, an interposer 123 and a mounting substrate 140. The die 113 is a chip on which various circuits are formed, and is electrically connected to the interposer 123 via a plurality of wires such as wires 111 and 112. The surface where the die 113 is connected is defined as the "front surface" of the interposer 123.

The interposer 123 electrically connects the die 113 and the mounting substrate 140. Inside the interposer 123, wiring lines such as a signal line 121, a power supply line (not illustrated), and a ground line 122 and vias are formed. In addition, on the rear surface of the interposer 123, a plurality of solder balls such as solder balls 131 and 132 are arrayed, and the interposer 123 is mounted over the mounting substrate 140 via the solder balls.

A component composed of the die 113, the interposer 123, and the mounting substrate 140 is called a semiconductor chip and/or a semiconductor package. Fig. 1 illustrates a predetermined semiconductor chip (or semiconductor package) among various components disposed in the semiconductor device 100.

For example, an axis perpendicular to the substrate plane of the mounting substrate 140 is a "Z axis", and a predetermined axis parallel to the substrate plane is an "X axis". An axis perpendicular to the X axis and Z axis is a "Y axis". Fig. 1a is a sectional view as viewed from the Y-axis direction.

The above-described solder ball 131 and wire 111 are connected to the signal line 121. When the circuits in the mounting substrate 140 and the die 113 are driven, a signal current flows through the wire 111, the signal line 121 and the solder ball 131. In addition, the solder ball 132 and the wire 112 are connected to the ground line 122. A return current flows therethrough when the circuits are driven. In Fig. 1a, the arrow indicates the direction of currents (such as a signal current and a return current).

As exemplified in Figs. 1b and 1c, a loop current (a signal current and a return current) flowing through a loopshaped path formed by the signal line 121 and the ground line 122 generates a magnetic field, and the intensity and direction of the magnetic field are represented by the magnetic moment. The black arrow in Fig. 1b indicates a magnetic moment. Fig. 1c illustrates a magnetic moment and a loop current as viewed from the Y-axis direction in the case where the direction of the magnetic moment is the Y-axis direction.

In addition, in the semiconductor device 100, the layer including the die 113 and the wires is the conductor layer 110, and the layer including the via and the wiring lines such as the signal line 121 and the ground line 122 inside the interposer 123 is a conductor layer 120. The layer in which the plurality of solder balls such as the solder balls 131 and 132 are arrayed is a conductor layer 130. As exemplified in Fig. 1, the semiconductor device 100 can be regarded as including the conductor layers 110, 120, and 130 that are layered. These conductor layers are electrically connected as described above.

Fig. 2 is a diagram illustrating an example of a magnetic moment according to the first embodiment of the present technology. Fig. 2a is a perspective view illustrating a magnetic moment and a loop current of the conductor layer 110 including the die 113 and the wires. Fig. 2b is a perspective view illustrating a magnetic moment and a loop current of the conductor layer 130 including the solder balls.

As exemplified in Figs. 2a and 2b, the direction of the magnetic moment in the magnetic field formed by the conductor layer 110 and the direction of the magnetic moment in the magnetic field formed by the conductor layer 130 are opposite to each other, and they cancel each other out.

Here, the electromagnetic radiation from the semiconductor device 100 is mainly generated by a current flowing through the wires, vias, and solder balls. This electromagnetic radiation can be modeled by a magnetic moment, as described in International Electrotechnical Commission (IEC) 62433. For example, assuming that a loop current on the X-Y plane centered at the origin generates a magnetic moment toward an observation point P on the X-Z plane from the origin, the magnetic field at the observation point P can be expressed by the following equations.

[Equation 1]

$$H_r = \frac{IS\cos\theta}{2\pi\, r^3}\left(1 + jkr\right)e^{-jkr} \qquad \ldots \text{EQUATION 1}$$

[Equation 2]

$$H_\theta = \frac{IS\sin\theta}{4\pi\, r^3}\left\{1 + jkr + (jkr)^2\right\}e^{-jkr} \qquad \ldots \text{EQUATION 2}$$

In Equation 1, Hr represents a magnetic field in the direction from the origin to the observation point P. I represents a loop current, and S represents the area of the loop through which a current flows. $\theta$ represents an angle between a magnetic moment and the Z axis, and r represents a distance from the origin to the observation point P. f represents frequency.

By simplifying Equation 1 and Equation 2, the following equations can be obtained.

$$H = (I \times f^2 \times S)/r \qquad \ldots \text{Equation 3}$$

According to Equation 3, the smaller the distance r to the observation point becomes, the greater the intensity of the magnetic field H becomes, and the larger the current I becomes, the greater the intensity of the magnetic field H becomes. As such, the smaller r becomes due to high-density mounting, the greater the noise becomes due to the magnetic field. In addition, the larger the current I becomes due to higher functionality of the device, the greater the noise becomes due to the magnetic field.

By reducing the area S of the loop as disclosed in PTL 1, the noise can be reduced according to Equation 3. However, in the case of a multi-pin structure having two or more terminals for supplying power, there is a possibility that the area of some loops might become larger than expected, and as a result, the noise might not be sufficiently reduced.

On the other hand, as described above, in the semiconductor device 100, the magnetic moment in the magnetic field formed by the conductor layer 110 and the magnetic moment in the magnetic field formed by the conductor layer 130 cancel each other out. With this design, the intensity of the magnetic field resulting from the synthesis of the magnetic field formed by the conductor layer 110 and the magnetic field formed by the conductor layer 130 becomes very small, and the noise generated by the magnetic field can be sufficiently reduced.

Note that the semiconductor device 100 is designed such that the magnetic moments resulting from the loop current formed by the signal current and return current cancel each other out, but this configuration is not necessarily employed. Designing may be performed for the magnetic moments resulting from the loop current formed by the power supply current and return current.

In addition, although designing is performed such that the magnetic moments of the conductor layer 110 and the conductor layer 130 among the conductor layers 110, 120, and 130 cancel each other out, this configuration is not necessarily employed. Designing may be performed such that the magnetic moments of two layers other than the combination of the conductor layer 110 and the conductor layer 130 cancel each other out.

Note that the conductor layer 110 is an example of the first conductor layer recited in the claims, and the conductor layer 130 is an example of the second conductor layer recited in the claims.

Next, a method of designing the semiconductor device 100 exemplified in Figs. 1 and 2 is described.

Example Configuration of Information Processing Device

Fig. 3 is a block diagram illustrating an example configuration of an information processing device 200 according to the first embodiment of the present technology. The information processing device 200 includes a processing unit 205 and a display section 250. The processing unit 205 includes a data holding section 210, an electromagnetic field analysis section 220, a magnetic moment acquiring section 230, a magnetic field intensity determination section 240, and a design change section 260. As the information processing device 200, for example, a personal computer is assumed. The function of the processing unit 205 is implemented by installing an application for circuit design in the information processing device 200, for example. The information processing device 200 executes at least a part of a step of designing the semiconductor device 100 in accordance with an operation signal of the user.

The data holding section 210 holds data for design. For example, design data of the semiconductor device 100 and data related to design constraints are held in the data holding section 210. The design data includes, for example, data indicating the circuit configuration and the array of bonding pads, vias, and solder balls of each of the conductor layers 110, 120, and 130, for example.

The electromagnetic field analysis section 220 determines the magnetic field distribution of each of the plurality of conductor layers (for example, the conductor layers 110 and 130) through electromagnetic field analysis based on the design data. The electromagnetic field analysis section 220 displays the magnetic field distribution of each layer on the display section 250. In addition, the electromagnetic field analysis section 220 supplies the determined magnetic field distribution to the magnetic moment acquiring section 230 and the magnetic field intensity determination section 240.

The magnetic moment acquiring section 230 determines the magnetic moment in the magnetic field of each of the plurality of conductor layers on the basis of the magnetic field distribution. The magnetic moment acquiring section 230 displays the magnetic moment of each layer on the display section 250. As a method of determining the magnetic moment from the magnetic field distribution, for example, it is possible to use the method described in "Yang Zhong, et. al., A New Reconstruction Method for a Source Above an Arbitrarily Shaped Ground Plane, IEEE 2020".

The magnetic field intensity determination section 240 determines the intensity of the magnetic field obtained by synthesizing the magnetic fields of the plurality of conductor layers, and determines whether the difference between that magnetic field intensity and the minimum value under design constraints is smaller than an acceptable value (in other words, the magnetic field intensity is substantially the minimum value). The magnetic field intensity determination section 240 displays the magnetic field distribution after synthesis and the determination result on the display section 250.

The user refers to the information displayed on the display section 250, and performs an operation for a design change as necessary. For example, the user refers to the magnetic moment of each layer, and, if they do not cancel each other out, attempts to make a design change such that they cancel each other out.

The design change section 260 changes the design data in accordance with the operation signal of the user. Although the user manually makes the design change here, the information processing device 200 may automatically make the design change.

Fig. 4 is a diagram for describing a method of analyzing a magnetic field distribution according to the first embodiment of the present technology. The information processing device 200 determines the magnetic field distribution of an analysis target in the case where the periphery of a conductor layer that is not the analysis target is covered with a perfect conductor in an analysis model, for example.

For example, the conductor layer 110 is set as an analysis target. For an information processing device 100, the periphery of the conductor layer 120 is covered with a perfect conductor 151 in the analysis model, and the periphery of the conductor layer 130 is covered with a perfect conductor 152. The ground terminals (such as pads) of the conductor layer 120 are connected to the perfect conductor 151, and the solder balls of the ground of the conductor layer 130 are connected to the perfect conductor 152. In this manner, by shielding the conductor layers 120 and 130 that are not the analysis target, the electromagnetic field analysis section 220 can analyze only the magnetic field distribution of the conductor layer 110 that is the analysis target.

Fig. 5 is a diagram illustrating an example of the magnetic field distribution and magnetic moment before a design change according to the first embodiment of the present technology. Fig. 5a is an example of the magnetic field distribution of the conductor layer 110, and Fig. 5b is an example of the magnetic field distribution of the conductor layer 130. Fig. 5c illustrates an example of the magnetic moment obtained from the magnetic field distribution of Fig. 5a, and Fig. 5d illustrates an example of the magnetic moment obtained from the magnetic field distribution in Fig. 5b. Fig. 5e illustrates an example of the magnetic field distribution obtained by synthesizing the magnetic field distributions in Figs. 5a and 5b.

It is assumed that, as exemplified in Figs. 5c and 5d, the magnetic moments of the conductor layers 110 and 130 are different in direction, but do not cancel each other out. In this case, the intensity of the magnetic field after synthesis exemplified in Fig. 5e is high, and the noise due to that magnetic field is undesirably increased. The user determines the directions of the magnetic moments of the layers by referring to the screen of the information processing device 200, and makes a design change such that the magnetic moments cancel each other out.

Fig. 6 is a diagram illustrating an example of the magnetic field distribution and magnetic moment after a design change according to the first embodiment of the present technology. Fig. 6a illustrates an example of the magnetic moment and loop current of the conductor layer 110 after a design change, and Fig. 6b illustrates an example of the magnetic moment and loop current of the conductor layer 130 after a design change. Fig. 6c illustrates an example of the magnetic moment obtained from the magnetic field distribution in Fig. 6a, and Fig. 6d illustrates an example of the magnetic moment obtained from the magnetic field distribution in Fig. 6b. Fig. 6e illustrates an example of the magnetic field distribution obtained by synthesizing the magnetic field distributions in Fig. 6a and 6b.

As exemplified in Figs. 6c and 6d, after the design change, the magnetic moment of the conductor layer 110 and the magnetic moment of the conductor layer 130 are opposite to each other, and cancel each other out. In this manner, the intensity of the magnetic field after synthesis can be sufficiently reduced, thereby reducing the noise.

Fig. 7 is a diagram illustrating an example of a ball arrangement and a magnetic moment before and after a design change according to the first embodiment of the present technology. Fig. 7a is a perspective view illustrating an example of the magnetic moment and loop current of the conductor layer 130 before the design change. Fig. 7b is a plan view illustrating an example of the arrangement of solder balls of the conductor layer 130 before the design change.

Now attention is focused on the solder ball 131 through which a signal current flows and the solder ball 132 through which a return current flows. It is assumed that as exemplified in Fig. 7b, the solder ball 132 is disposed on the left side of the solder ball 131 when observed from the Z-axis direction. In this case, a magnetic moment in a downward direction in the page is generated by the loop current flowing through the solder balls.

For example, the user operates the information processing device 200 to make a design change of exchanging the position of the solder ball 131 and the position of the solder ball 132.

Fig. 7c is a perspective view illustrating an example of the magnetic moment and loop current of the conductor layer 130 after the design change. Fig. 7d is a plan view illustrating an example of the arrangement of solder balls of the conductor layer 130 after the design change.

As exemplified in Figs. 7c and 7d, as a result of the design change, the directions of the loop current and magnetic moments become opposite to those before the design change. As exemplified in Figs. 7a to 7d, the directions of the magnetic moments can be changed by changing the arrangement of solder balls. In addition, the directions of the magnetic moments can be changed by changing the arrangement of wires and vias, or by changing the circuit configuration.

Fig. 8 is a diagram for describing a method of determining a minimum value of the magnetic field intensity according to the first embodiment of the present technology. Fig. 8a is a plan view illustrating an example of the arrangement of solder balls before optimization. Fig. 8b is a graph showing an example of a variation in magnetic field intensity resulting from the design change. Fig. 8c is a plan view illustrating an example of the arrangement of solder balls after optimization.

Various design constraints are imposed on design parameters of the conductor layer. As the design parameters, the types, the numbers, and the positions of solder balls, wires, and vias are assumed. Examples of the types include whether the current passing through is a signal current (or signal current) or a return current.

For example, as exemplified in Fig. 8a, it is assumed that an array of four solder balls 131 through which a signal current flows and four solder balls 132 through which a return current flows is required in the conductor layer 130. Also in other conductor layers, various design constraints are imposed on each design parameter for the types, the numbers, and the positions of wires and vias. When making a design change, the user changes these design parameters under design constraints.

The magnetic field intensity determination section 240 in the information processing device 200 holds the set design parameter and the intensity of the magnetic field after synthesis in association with each other. The ordinate in Fig. 8b indicates the intensity of the magnetic field after synthesis, and the abscissa indicates design parameter. The magnetic field intensity determination section 240 retains two or more plots on the graph and, by curve fitting, obtains a function of the curve that best fits the group of plots. Then, the magnetic field intensity determination section 240 obtains the minimum value of the magnetic field intensity under constraint conditions as a global optimum solution on the basis of the function. The magnetic field intensity determination section 240 determines whether the difference between the intensity of the magnetic field after synthesis of the current state and the determined optimum solution (specifically, the minimum value) is smaller than a predetermined acceptable value. The curve in Fig. 8b is a curve obtained by curve fitting.

Fig. 8c illustrates an example of the arrangement of solder balls corresponding to the optimum solution.

Exemplary Operation of Information Processing Device

Fig. 9 is a flowchart showing an example of an operation of the information processing device 200 according to the first embodiment of the present technology. This operation is started when a predetermined application for circuit design is executed, for example.

The information processing device 200 analyzes and displays the magnetic field distribution of each conductor layer (step S901). Then, the information processing device 200 converts the magnetic field distribution of each conductor layer into a magnetic moment and displays it (step S902). The user determines whether the magnetic moments of the layers are canceled each other out (step S903). When the magnetic moments are canceled each other out (step S903: Yes), the information processing device 200 determines whether the difference between the intensity of the magnetic field after synthesis and the minimum value under design constraints is smaller than the acceptable value (in other words, the magnetic field intensity is substantially the minimum value) (step S904). Note that the determination in step S903 may be performed by the information processing device 100 instead of the user.

When the magnetic moments are not canceled each other out (step S903: No), or when the magnetic field intensity is not substantially the minimum value (step S904: No), the information processing device 200 displays the magnetic field distribution after synthesis and the determination result (step S905). Then, the information processing device 200 changes the design data in accordance with the operation signal of the user (step S906), and repeatedly executes step S901 and subsequent steps.

On the other hand, when the magnetic field intensity is not substantially the minimum value (step S904: Yes), the information processing device 200 displays the magnetic field distribution after synthesis and the determination result (step S907), and terminates the operation for circuit design.

As exemplified in Fig. 9, by repeating steps S901 to S906, the circuit is optimized. The information processing device 200 determines and displays the magnetic moment for each conductor layer in that cycle, and thus the user can efficiently design the semiconductor device 100 with reduced noise.

Note that the method including procedures exemplified in Fig. 9 is an example of the designing method recited in the claims. In addition, a program for causing a computer to execute the procedure exemplified in Fig. 9 is an example of the program recited in the claims.

Fig. 10 illustrates an example of a display screen 500 of the magnetic field distribution of each layer according to the first embodiment of the present technology. As exemplified in Fig. 10, the information processing device 200 determines and displays the magnetic field distributions of the conductor layer 110 and the conductor layer 130.

Fig. 11 is a diagram illustrating an example of a display screen of magnetic moments according to the first embodiment of the present technology. The information processing device 200 determines and displays an M1, which is a magnetic moment of the conductor layer 110, and an M2, which is a magnetic moment of the conductor layer 130, for example.

For example, as with a display screen 501 in Fig. 11a, the information processing device 200 decomposes each of the magnetic moments M1 and M2 into vectors Mx, My, and Mz in an orthogonal coordinate system of the X-axis, Y-axis, and Z-axis, and displays the vector quantities.

Alternatively, as with a display screen 502 in Fig. 11b, the information processing device 200 displays arrow symbols as the magnetic moments M1 and M2 on a three-dimensional space.

Fig. 12 is an example of a display screen 503 of the magnetic field distribution after synthesis according to the first embodiment of the present technology. As exemplified in Fig. 12, the information processing device 200 displays a synthesized magnetic field distribution of the conductor layers.

Note that, Figs. 10 to 12 each illustrate an example of a part of the display screen of the information processing device 200, and the information processing device 200 can display various screens for circuit design as necessary in addition to the above-described screens.

In this manner, according to the first embodiment of the present technology, since the information processing device 200 displays the magnetic moment of each conductor layer, the user can easily design the semiconductor device 100 with reduced noise.

Variations

In the above-described first embodiment, the information processing device 200 determines the magnetic distribution of the analysis target by shielding the part other than the analysis target, but this analysis method is not necessarily employed. The information processing device 200 of a variation of the first embodiment is different from that of the first embodiment in that it connects an excitation source to a conductor layer other than the analysis target.

Fig. 13 is a diagram for describing a method of analyzing a magnetic field distribution according to a variation of the first embodiment of the present technology. The information processing device 200 of a first variation of the first embodiment determines the magnetic field distribution of the analysis target in the case where an excitation source is connected to a terminal of a conductor layer that is not the analysis target in an analysis model.

For example, the conductor layer 110 is set as an analysis target among the conductor layers 110, 120, and 130. The electromagnetic field analysis section 220 divides the structure of the analysis target into a plurality of meshshaped areas, using an algorithm such as the Finite-Difference Time-Domain (FDTD) method, and performs calculations.

As exemplified in Fig. 13a, excitation sources such as V1, V2, V3, and V4 are connected to the corresponding terminals (such as solder balls 163, 164, and 165 and a pad 161) in the area obtained by the division. As the excitation sources, a voltage is applied, for example. In this manner, the electromagnetic field analysis section 220 can calculate the energy of all meshes and derive the magnetic field distribution of a given plane.

The electromagnetic field analysis section 220 acquires an excitation source V1' of the boundary between the conductor layers 110 and 120 from the energy information of the mesh.

Then, as exemplified in Fig. 13b, the electromagnetic field analysis section 220 connects the excitation source V1' to each terminal of a conductor layer that is not the analysis target. For example, the excitation source V1' is connected to the terminals of the conductor layer 120, such as a pad 162 and the solder balls 163, 164, and 165. As a result, no potential difference occurs between the pad 162 and the solder balls 163, 164, and 165, and no current flows through the conductor layers 120 and 130. In this manner, the electromagnetic field analysis section 220 can acquire only the magnetic field distribution of the conductor layer 110, excluding electromagnetic radiation from the conductor layers 120 and 130.

In this manner, according to the variation of the first embodiment of the present technology, the electromagnetic field analysis section 220 connects the excitation source to the terminal of a conductor layer that is not the analysis target, and thus can determine only the magnetic field distribution of the analysis target.

2. Second Embodiment

In the above-described first embodiment, the magnetic moment of each of two layers such as the conductor layers 110 and 130 is determined, but the magnetic moment of each of three or more conductor layers may be determined.

Fig. 14 is a diagram illustrating an example of a magnetic moment before and after synthesis according to a second embodiment of the present technology. The electromagnetic field analysis section 220 of the second embodiment determines not only the magnetic field distributions of the conductor layers 110 and 130, but also the magnetic field distribution of the conductor layer 120. Further, the magnetic moment acquiring section 230 acquires the magnetic moment of each of the conductor layers 110, 120, and 130. Note that the conductor layers 110, 120, and 130 are examples of the first, second, and third conductor layers recited in the claims.

Fig. 14a illustrates a magnetic moment and a loop current of the conductor layer 110, and Fig. 14b illustrates a magnetic moment and a loop current of the conductor layer 120. Fig. 14c illustrates a magnetic moment and a loop current of the conductor layer 130.

The magnetic moment acquiring section 230 synthesizes the magnetic moments of two conductor layers among the three conductor layers. For example, the magnetic moments of the conductor layers 120 and 130 are synthesized.

Fig. 14d illustrates a magnetic moment and a loop current of the conductor layer 110, and Fig. 14e illustrates a magnetic moment and a loop current after synthesis. The electromagnetic field analysis section 220 displays these magnetic moments on the display section 250. Thereafter, the same processes as those of the first embodiment are executed.

Note that, even in a case of four or more conductor layers, the electromagnetic field analysis section 220 can synthesize and display the magnetic moments of a plurality of conductor layers among the four or more conductor layers in the same manner. In addition, the variation of the first embodiment may be applied to the second embodiment.

As described above, since the information processing device 200 synthesizes and displays the magnetic moments of the two layers among the three layers, the user can efficiently perform the designing by grasping the directions of the magnetic moments as in the case of two layers by referring to the display screen.

In this manner, according to the second embodiment of the present technology, since the information processing device 200 synthesizes and displays the magnetic moments of the two layers among the three layers, the user can efficiently perform the designing.

It should be noted that the above-described embodiments are merely examples for embodying the present technology, and the matters in the embodiments correspond respectively to the invention-specific matters in the claims. Similarly, the invention-specific matters in the claims correspond respectively to the matters in the embodiments of the present technology having the same names. However, the present technology is not limited to the embodiments, and can be embodied by various modifications to the embodiments without departing from the gist thereof.

Further, the processing procedures described in the above embodiments may be regarded as a method including the series of procedures, or may be regarded as a program for causing a computer to execute the series of procedures or as a recording medium storing the program. As the recording medium, for example, a Compact Disc (CD), a MiniDisc (MD), a Digital Versatile Disc (DVD), a memory card, a Blu-ray Disc (Blu-ray (trade name) Disc), or the like may be used.

It should be noted that the effects described in this specification are merely examples and are not limited thereto, and other effects may also be achieved.

It should be noted that the present technology may also include the following configurations.

(1) An information processing device including a processing unit configured to perform processing of determining a first magnetic moment in a first magnetic field formed by a first conductor layer and a second magnetic moment in a second magnetic field formed by a second conductor layer layered on the first conductor layer.

(2) The information processing device according to (1), in which the processing unit includes an electromagnetic field analysis section configured to determine a distribution of the first and second magnetic fields from design data of each of the first and second conductor layers, and a magnetic moment acquiring section configured to determine the first and second magnetic moments, based on the distribution of the first and second magnetic fields.

(3) The information processing device according to (2), in which the processing unit further includes a design change section configured to change the design data.

(4) The information processing device according to (2) or (3), in which the processing unit further includes a magnetic field intensity determination section configured to determine whether a difference between a magnetic field intensity of a magnetic field obtained by synthesizing the first and second magnetic fields and a predetermined minimum value is smaller than an acceptable value.

(5) The information processing device according to any one of (2) to (4), in which the electromagnetic field analysis section determines a magnetic field distribution of the analysis target in a case where one of the first and second conductor layers that is not the analysis target is shielded.

(6) The information processing device according to any one of (2) to (4), in which the electromagnetic field analysis section determines a magnetic field distribution of the analysis target in a case where a predetermined excitation source is connected to a terminal of one of the first and second conductor layers that is not the analysis target.

(7) The information processing device according to any one of (2) to (6), in which the magnetic moment acquiring section further determines a third magnetic moment formed by a third conductor layer layered on the second conductor layer, and a magnetic moment obtained by synthesizing two of the first, second, and third magnetic moments.

(8) The information processing device according to any one of (1) to (7), in which the processing unit displays each of the first and second magnetic moments on a display section.

(9) A designing method for a semiconductor device, the method including a procedure in which an information processing device determines a first magnetic moment in a first magnetic field formed by a first conductor layer and a second magnetic moment within a second magnetic field formed by a second conductor layer layered on the first conductor layer.

(10) A program causing a computer to execute a procedure in which an information processing device determines a first magnetic moment in a first magnetic field formed by a first conductor layer and a second magnetic moment within a second magnetic field formed by a second conductor layer layered on the first conductor layer.

(11) A semiconductor device including: a first conductor layer configured to form a first magnetic field having a first magnetic moment; and a second conductor layer layered on the first conductor layer and configured to form a second magnetic field having a second magnetic moment that cancels out the first magnetic moment and is canceled out by the first magnetic moment.

Reference Signs List

100 Semiconductor device
110, 120, 130 Conductor layer
111, 112 Wire
113 Die
121 Signal line
122 Ground line
123 Interposer
131, 132, 163 to 165 Solder ball
140 Mounting substrate
151, 152 Perfect conductor
161, 162 Pad
200 Information processing device
205 Processing unit
210 Data holding section
220 Electromagnetic field analysis section
230 Magnetic moment acquiring section
240 Magnetic field intensity determination section
250 Display section
260 Design change section

**Claims**

1. An information processing device comprising:
   a processing unit configured to perform processing of determining a first magnetic moment in a first magnetic field formed by a first conductor layer and a second magnetic moment in a second magnetic field formed by a second conductor layer layered on the first conductor layer.

2. The information processing device according to claim 1, wherein

the processing unit includes

an electromagnetic field analysis section configured to determine a distribution of the first and second magnetic fields from design data of each of the first and second conductor layers, and

a magnetic moment acquiring section configured to determine the first and second magnetic moments, based on the distribution of the first and second magnetic fields.

3. The information processing device according to claim 2, wherein the processing unit further includes a design change section configured to change the design data.

4. The information processing device according to claim 2, wherein the processing unit further includes a magnetic field intensity determination section configured to determine whether a difference between a magnetic field intensity of a magnetic field obtained by synthesizing the first and second magnetic fields and a predetermined minimum value is smaller than an acceptable value.

5. The information processing device according to claim 2, wherein the electromagnetic field analysis section determines a magnetic field distribution of an analysis target in a case where one of the first and second conductor layers that is not the analysis target is shielded.

6. The information processing device according to claim 2, wherein the electromagnetic field analysis section determines a magnetic field distribution of the analysis target in a case where a predetermined excitation source is connected to a terminal of one of the first and second conductor layers that is not the analysis target.

7. The information processing device according to claim 2, wherein the magnetic moment acquiring section further determines a third magnetic moment formed by a third conductor layer layered on the second conductor layer, and a magnetic moment obtained by synthesizing two of the first, second, and third magnetic moments.

8. The information processing device according to claim 1, wherein the processing unit displays each of the first and second magnetic moments on a display section.

9. A designing method for a semiconductor device, the method comprising:
a procedure in which an information processing device determines a first magnetic moment in a first magnetic field formed by a first conductor layer and a second magnetic moment within a second magnetic field formed by a second conductor layer layered on the first conductor layer.

10. A program causing a computer to execute:
a procedure in which an information processing device determines a first magnetic moment in a first magnetic field formed by a first conductor layer and a second magnetic moment within a second magnetic field formed by a second conductor layer layered on the first conductor layer.

11. A semiconductor device comprising:

a first conductor layer configured to form a first magnetic field having a first magnetic moment; and
a second conductor layer layered on the first conductor layer and configured to form a second magnetic field having a second magnetic moment that cancels out the first magnetic moment and is canceled out by the first magnetic moment.

# Fig.1

# Ｆｉｇ．２

a

b

# Fig.3

200

INFORMATION PROCESSING DEVICE    205

PROCESSING UNIT    260

210

| DATA HOLDING SECTION | DESIGN CHANGE SECTION |

OPERATION SIGNAL

220    240

| ELECTROMAGNETIC FIELD ANALYSIS SECTION | MAGNETIC FIELD INTENSITY DETERMINATION SECTION |

230    250

| MAGNETIC MOMENT ACQUIRING SECTION | DISPLAY SECTION |

# Fig.4

# F i g . 5

# Fig.6

a

b

c

d

e

# Fig.7

# Ｆｉｇ．8

MAGNETIC FIELD
INTENSITY

DESIGN
PARAMETER

# Fig.9

```
        ┌─────────────┐
        │    START    │
        └──────┬──────┘
               │                                                              ┌───────────┐
               ▼  ┌─ S901                                                     │           │
        ┌──────────────────┐                                                  │           │
        │ ANALYZE AND DISPLAY │                                               │           │
        │  MAGNETIC FIELD    │                                                │           │
        │  DISTRIBUTION OF   │                                                │           │
        │   EACH LAYER       │                                               │           │
        └──────────┬─────────┘                                               │           │
                   │  ┌─ S902                                                │           │
        ┌──────────────────┐                                                │           │
        │  DISPLAY MAGNETIC  │                                               │           │
        │ MOMENT OF EACH LAYER│                                              │           │
        └──────────┬─────────┘                                              │           │
                   │        ┌─ S903                                         │           │
               ◇ ARE                                                        │           │
          MAGNETIC MOMENTS ─── No ──────────────────┐                       │           │
         CANCELED EACH OTHER                         │                       │           │
              OUT? ◇                                 │                       │           │
                   │ Yes                             │                       │           │
                   ▼         ┌─ S904                 │                       │           │
               ◇ IS                                  │                       │           │
          MAGNETIC FIELD ─── No ─────────────────┐   │                       │           │
        INTENSITY SUBSTANTIALLY                  │   │                       │           │
          MINIMUM VALUE? ◇                       ▼   ▼  ┌─ S905              │           │
                   │ Yes                  ┌──────────────────┐               │           │
                   │     ┌─ S907          │ DISPLAY MAGNETIC  │              │           │
        ┌──────────────────┐              │ FIELD DISTRIBUTION │             │           │
        │ DISPLAY MAGNETIC  │             │ AFTER SYNTHESIS AND│             │           │
        │ FIELD DISTRIBUTION│             │ DETERMINATION RESULT│            │           │
        │ AFTER SYNTHESIS AND│            └──────────┬─────────┘             │           │
        │ DETERMINATION RESULT│                      │  ┌─ S906              │           │
        └──────────┬─────────┘            ┌──────────────────┐               │           │
                   │                      │  DESIGN CHANGE    ├──────────────┘           │
                   ▼                      └──────────────────┘
        ┌─────────────┐
        │     END     │
        └─────────────┘
```

# Fig.10

# Fig.11

| | Mx | My | Mz |
|---|---|---|---|
| M1[Am$^2$] | A1 | B1 | C1 |
| M2[Am$^2$] | A2 | B2 | C2 |

a

b

# Fig.12

503

MAGNETIC FIELD DISTRIBUTION
(AFTER SYNTHESIS)

# Fig.13

a

b

# Fig.14

a

d

b

e

c

## INTERNATIONAL SEARCH REPORT

| International application No. |
| --- |
| **PCT/JP2024/016983** |

| **A.** | **CLASSIFICATION OF SUBJECT MATTER** |
| --- | --- |

*G06F 30/398*(2020.01)i; *G06F 119/10*(2020.01)n
FI: G06F30/398; G06F119:10

According to International Patent Classification (IPC) or to both national classification and IPC

| **B.** | **FIELDS SEARCHED** |
| --- | --- |

Minimum documentation searched (classification system followed by classification symbols)

G06F30/00-30/398; G01R29/08; H01L21/00-33/64; H05K1/00-1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 9-167851 A (NEC CORPORATION) 24 June 1997 (1997-06-24) | 11 |
| | paragraphs [0018]-[0024] | |
| A | | 1-10 |
| X | JP 2016-177189 A (JAPAN DISPLAY INC.) 06 October 2016 (2016-10-06) | 11 |
| | paragraphs [0013]-[0040] | |
| A | | 1-10 |
| A | JP 2002-202332 A (MATSUSHITA ELECTRIC WORKS, LTD.) 19 July 2002 (2002-07-19) | 1-11 |
| | claims | |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **11 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/016983**

| Patent document cited in search report | Publication date (day/month/year) | Patent family member(s) | Publication date (day/month/year) |
|---|---|---|---|
| JP 9-167851 A | 24 June 1997 | (Family: none) | |
| JP 2016-177189 A | 06 October 2016 | (Family: none) | |
| JP 2002-202332 A | 19 July 2002 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014082393 A

**Non-patent literature cited in the description**

- **YANG ZHONG**. A New Reconstruction Method for a Source Above an Arbitrarily Shaped Ground Plane. IEEE, 2020